# EUROPÄISCHE PATENTSCHRIFT

(11) **EP 1 272 566 B1**
(45) Veröffentlichungstag und Bekanntmachung des Hinweises auf die Patenterteilung: **17.12.2003**
(21) Anmeldenummer: 01919430.7
(22) Anmeldetag: 04.04.2001
(51) Int. Cl.: C09B 23/02, G01N 33/58

(54) **CYANINFARBSTOFFE ALS FLUORESZENZMARKER**
FLUORESCENT MARKER
MARQUEUR FLUORESCENT

(30) Priorität: 12.04.2000 DE 10018199
(43) Veröffentlichungstag der Anmeldung: 08.01.2003
(73) Patentinhaber: FEW Chemicals GmbH, 06756 Wolfen (DE)
(72) Erfinder: REINER, Knut, 06766 Wolfen (DE); ERNST, Steffen, 04107 Leipzig (DE); MUSTROPH, Heinz, 06844 Dessau (DE)
(74) Vertreter: Hertz, Oliver, Dr.
(86) Internationale Anmeldenummer: EP0103851
(87) Internationale Veröffentlichungsnummer: WO01077229

(56) Entgegenhaltungen:
- DE-A- 3 912 046
- DE-A- 19 937 024
- MUJUMDAR R B ET AL: "CYANINE DYE LABELING REAGENTS: SULFOINDOCYANINE SUCCINIMIDYL ESTERS" BIOCONJUGATE CHEMISTRY, AMERICAN CHEMICAL SOCIETY, WASHINGTON, US, Bd. 4, Nr. 2, 1. März 1993 (1993-03-01), Seiten 105-111, XP000654181 ISSN: 1043-1802 in der Anmeldung erwähnt
- YARMOLUK S M ET AL: "Interaction of cyanine dyes with nucleic acids. XII. beta-substituted carbocyanines as possible fluorescent probes for nucleic acids detection" BIOORGANIC & MEDICINAL CHEMISTRY LETTERS, OXFORD, GB, Bd. 9, Nr. 12, 21. Juni 1999 (1999-06-21), Seiten 1677-1678, XP004167738 ISSN: 0960-894X

## Beschreibung

Die Erfindung betrifft Cyaninfarbstoffe für die Anwendung als Fluoreszenzmarker.

Fluoreszenzfarbstoffe werden als Marker auf vielfältige Weise für die Analyse eines Großteils klinisch, biologisch, biochemisch oder chemisch relevanter Substanzen, wie z.B. Zellen, Antikörper, Proteine, Hormone, Nucleinsäuren, Oligonucleotide, Kohlen-hydrate oder Amine und Mercaptane eingesetzt. In Kombination mit der leicht detektierbaren, durch Laser induzierten Fluoreszenz (LIF; Laser-Induced Fluorescence), sind schnelle Analysen in den o.a. Gebieten möglich.

Durch kovalente Bindung kann eine größere Anzahl Farbstoffmoleküle an eine Probe angeheftet werden als es im Fall einer unspezifischen nicht-kovalenten Bindung möglich ist, so daß die Intensität des Fluoreszenzlichtsignals stärker ist. Außerdem ermöglicht eine kovalente Bindung die eindeutige Markierung einer spezifischen Zielstruktur in einem Gemisch. Zur kovalenten Bindung des Fluoreszenzfarbstoffes an die Probe werden die Farbstoffe deshalb mit Reaktivgruppen versehen. Entsprechende Reaktivgruppen sind z.B. die Iodacetamidogruppe, die Isothiocyanatogruppe, N-Succinimidester von Alkylcarbonsäuren oder Phosphoramidite der Hydroxyalkylgruppen.

Als Reaktionspartner stehen bei Antikörpern, Proteinen, Hormonen, Nucleinsäuren, und anderen Biomolekülen u.a. Mercapto-(-SH), Amino- (-NH₂) und Hydroxygruppen (-OH) zur Verfügung.

In zunehmendem Maße werden Cyaninfarbstoffe als Fluoreszenzmarker eingesetzt. Generell neigen die Cyaninfarbstoffe aber in Lösung und an Oberflächen zur Bildung von Aggregaten [SCHEIBE: Angew. Chem. 49 (1936) 563; JELLEY: Nature 138 (1936) 1009]. Diese polymeren Farbstoffsysteme weisen im Vergleich zum einzelnen Molekül ein stark verändertes Absorptions- und Fluoreszenzverhalten auf.

Durch die Aggregation kann das Absorptionsmaximum im Vergleich zum Monomer hypsochrom (Dimere, H-Aggregate) oder bathochrom (J-Aggregate) verschoben sein [DIETZE: J. Signal AM. 1 (1973) 157]. Dieses differente Absorptionsverhalten hängt ab vom unterschiedlichen Versetzungswinkel zwischen der Molekül- und Aggregat-achse sowie dem intermolekularen Abstand der Farbstoffmoleküle im Aggregat (Packungsdichte). Unabhängig von diesen Einflußgrößen wurde gefunden, daß für die Bildung von J-Aggregaten mindestens sieben Farbstoffmoleküle notwendig sind [DALTROZZO et al.: Photogr . Sci. Eng. 20 (1974) 441], d.h. erst bei erhöhter Packungsdichte können sich J-Aggregate ausbilden.

Bedeutend für die Verwendung der Cyaninfarbstoffe als Fluoreszenzmarker in wässrigen Systemen ist es, die Bildung von Farbstoffaggregaten, die erheblich schlechter fluoreszieren, zu verhindern. Hinzu kommt, daß die Tendenz zu verstärkter Farbstoffaggregation mit der erhöhten Tendenz zu unspezifischen Wechselwirkungen des Farbstoffes an einem beliebigen Biomolekül einhergeht.

Arylsulfogruppen führen zu einer deutlichen Verbesserung der Wasserlöslichkeit eines Farbstoffes und sollen gleichzeitig die Bildung von Dimeren oder H-Aggregaten verhindern. Entsprechende Fluoreszenzmarker sind in DE 3.912.046, US 5.268.486 und [MUJUMDAR et al.: Bioconjugate Chem. 4 (1993) 105] beschrieben.

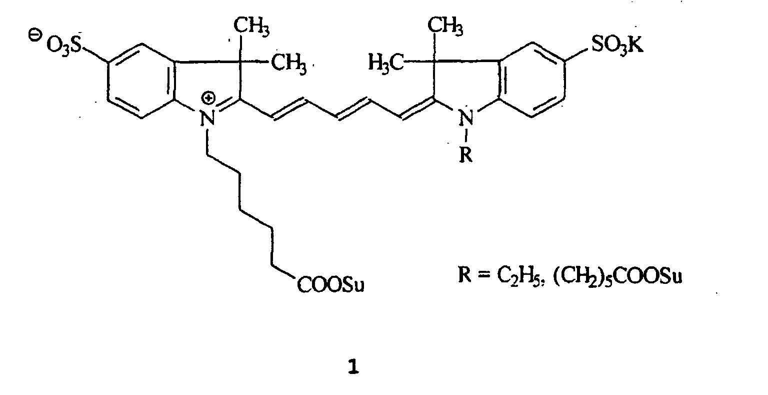

Am Beispiel des Farbstoffs der folgenden Struktur 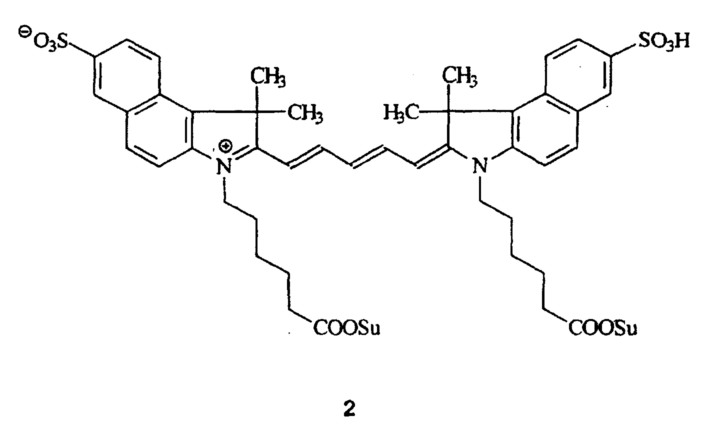 konnte gezeigt werden, daß sich in wässriger Lösung J-Aggregate bilden, während gekoppelt an Proteine, eine stark ausgeprägt Dimerenbande nachzuweisen war [MUJUMDAR et al.: Bioconjugate Chem. 7 (1996) 356], wodurch eine erhebliche Fluoreszenzlöschung eintritt. Es wird weiterhin beschrieben, daß durch Einführung von zwei weiteren Sulfogruppen, die Dimerenbildung unterdrückt wird.

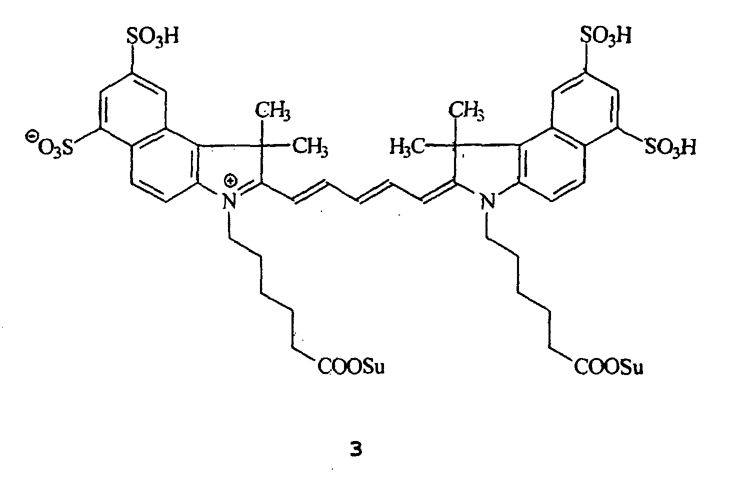

Dennoch zeigt sich, daß die Fluoreszenzquantenausbeute der Protein-Konjugate sowohl der Farbstoffe 1 als auch 3 um rd. ¼ gegenüber den freien, unkonjugierten Farbstoffen fällt [MUJUMDAR et al.: Bioconjugate Chem. 7 (1996) 356; Terpetschnig: NATO Advanced Research Workshop, Conference Paper, Trest, 1997].

Es ist die Aufgabe der Erfindung, neue Cyaninfarbstoffe anzugeben, die die oben genannten Nachteile nicht aufweisen und die insbesondere eine geringe Tendenz zur Aggregation sowohl in Lösung als auch am Zielmolekül aufweisen und für die Anwendung als Fluoreszenzmarker im Bereich 500 bis 700 nm geeignet sind.

Diese Aufgabe wird durch Cyanin-Farbstoffe mit den Merkmalen gemäß Anspruch 1 gelöst. Vorteilhafte Ausführungsformen und Verwendungen ergeben sich aus den abhängigen Ansprüchen.

Die vorliegende Erfindung wird durch die Figur erläutert.

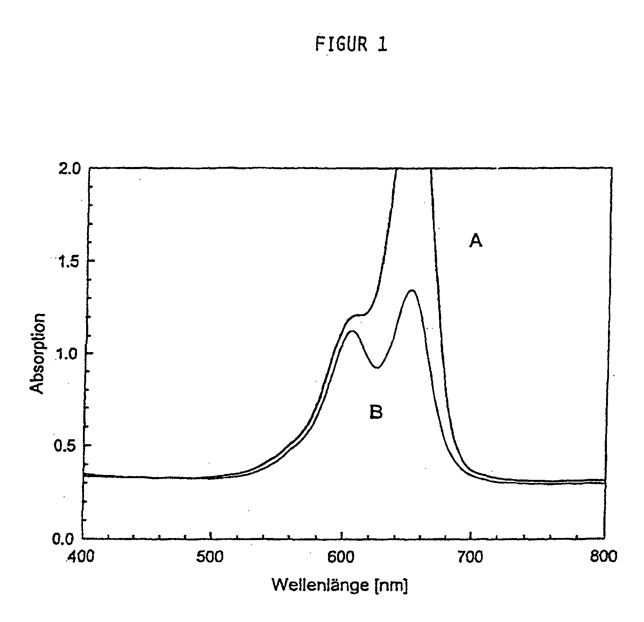

- Fig. 1: zeigt die VIS-Spektren des erfindungsgemäßen Cyaninfarbstoffes aus Beispiel 1 im Vergleich mit einem bekannten Cyaninfarbstoff.

Überraschend wurde gefunden, daß durch eine neue Kombination von Sulfoaryl-Substituenten mit Alkylsubstituenten in meso-Position der Methinkette die bekannten Nachteile der Bildung verschiedener Farbstoffaggregaten in Lösung als auch nach Anbindung an ein Zielmolekül beseitigt werden können. Ein erfindungsgemäßer Cyaninfarbstoff zeichnet sich durch eine Kombination von Sulfoarylsubstituenten, einen Alkylsubstituenten in meso-Position der Methinkette und mindestens einer reaktiven Gruppe aus, die die Anbindung an Zielmoleküle erlaubt, aus.

Die neuen Cyaninfarbstoffe lassen sich bei Verwendung verschiedener Anregungslichtquellen im Absorptionsbereich zwischen 500 und 700 nm einsetzen und besitzen gegenüber herkömmlichen Fluoreszenzfarbstoffen eine stark verringerte Aggregationsneigung in Lösung und nach Anbindung an ein Zielmolekül, z.B. Protein.

Bevorzugte Cyaninfarbstoffe weisen folgende Formeln auf:

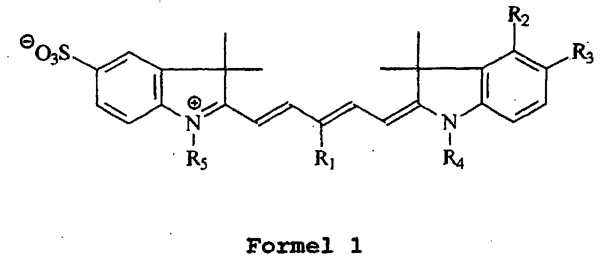

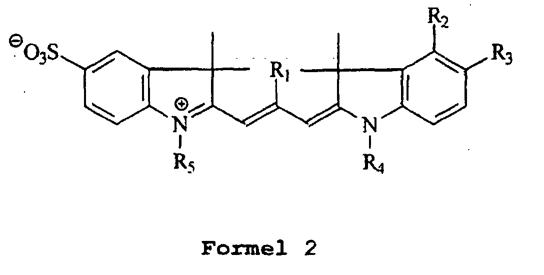

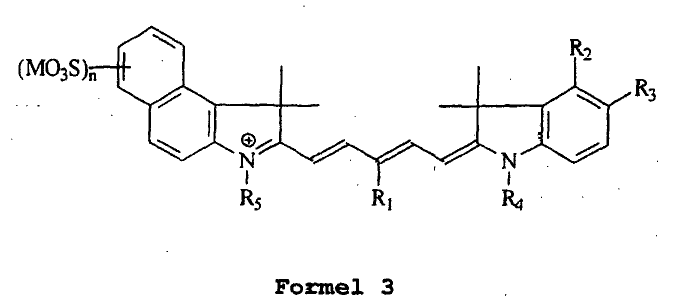

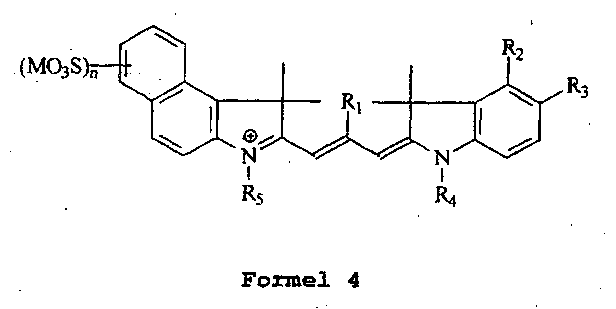

Darin bedeuten n = 1,2; R₁ = CH₃, C₂H₅; R₂, R ₃ = H, SO₃M, die zur Vervollständigung eines Benzolringes notwendigen vier CH-Gruppen bzw. die zur Vervollständigung eines Benzolringes notwendigen vier CH-Gruppen einschließlich (SO₃M)ₙ; M = H, Na, K.

In den allgemeinen Formeln 1 bis 4 stehen R₄ und R₅ für eine Alkylgruppe, eine Sulfoalkylgruppe, eine Carboxyalkylgruppe oder eine Hydroxyalkylgruppe (z. B. R₄ = (CH₂)ₖCH₃ mit k = 0 bis 3, (CH₂)ₘSO₃, (CH₂)ₘCOOH, (CH₂)ₘCH₂OH, m = 2 bis 5; R₅ = (CH₂)ₘCOOH, (CH₂)ₘCH₂OH, m = 2 bis 5).

In den Farbstoffen mit Carboxylgruppen können diese in ihre N-Succinimidester überführt werden, die dann direkt mit Aminogruppen am Biomolekül reagieren oder über einen sog. Aminolinker mit Hydroxygruppen. In den Farbstoffen mit Alkylhydroxy-gruppen können diese in Phosphoramidite überführt werden, die direkt mit der freien 5'-Hydroxygruppe von Nucleotiden zu einer Phosphitbindung reagieren, die im Folgenden zu einer stabilen Phosphatbindung oxidiert.

Aus Figur 1 läßt sich entnehmen, daß die erfindungsgemäßen Cyaninfarbstoffe weitaus bessere Fluoreszenzeigenschaften im Proteinkonjugat als die herkömmlichen Cyaninfarbstoffe aufweisen. In Figur 1 werden die VIS-Spektren des Farbstoffs aus Beispiel 1 [**A**] und Cy-5 (Amersham) [**B**] im Vergleich nach Ankopplung an ein Protein gezeigt. Wie aus den Spektren ohne weiteres zu entnehmen ist, zeigt der erfindungsgemäße Cyaninfarbstoff **A** den für ein Monomer typischen Kurvenverlauf, während bei dem herkömmlichen Cyaninfarbstoff **B** deutlich die Herausbildung einer Dimerenbande zu erkennen ist. Somit können mit den erfindungsgemäßen Cyaninfarbstoffen Biomoleküle ohne weiteres in durchaus zufriedenstellender Fluoreszenzausbeute markiert werden.

### Ausführungsbeispiele

### Beispiel 1:

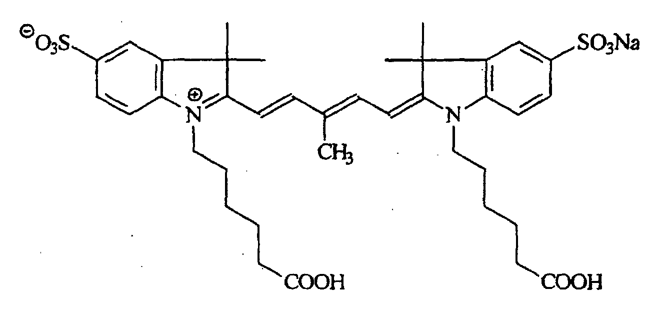

A) Natriumsalz des 1-(5-Carboxypentyl)-2,3,3-trimethyl-5-sulfoindoliumbromids:
   2,61 g Natriumsalz des 2,3,3-Trimethyl-5-sulfoindolenins und 2,1 g 6-Bromhexansäure werden in Substanz 2 h bei einer Badtemperatur von 110°C unter Rühren zur Reaktion gebracht. Nach beendeter Reaktion wird der ölige Rückstand mehrmals mit Aceton versetzt, bis ein Feststoff zurück bleibt. Ausbeute: 3, 4 g
B) 1-(5-Carboxypentyl)-2-[5-(1-(5-carboxypentyl)-1,3-dihydro-3,3-dimethyl-5-sulfo-2H-indol-2-yliden)-3-methylpenta-1,3-dienyl]-3,3-dimethyl-5-sulfo-3H-indolium-Innersalz, Natriumsalz:
   2,3 g des Quartärsalzes aus A) und 0,68 g des 2-Methylmalondianil-Hydrochlorids werden in 15 ml Ethanol in Gegenwart von je 1 ml Acetanhydrid und Triethylamin 25 Minuten am Rückfluß erhitzt. Nach Erkalten wird mit 2 ml 3 molarer HCl versetzt und der Farbstoff anschließend durch Etherzusatz gefällt. (λ = 647 nm)

### Beispiel 2:

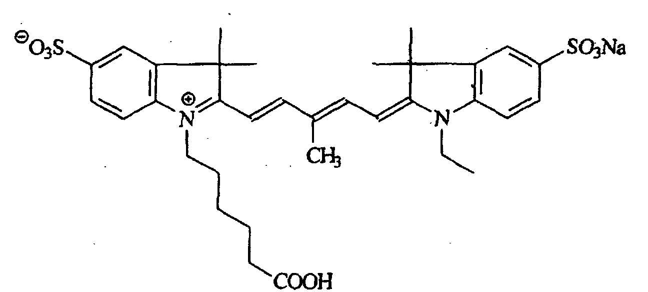

Die Substanz A) wird analog Beispiel 1 hergestellt.
B) 2-(9-Acetanilino-1,3-butadienyl-3-methyl)- 3,3-dimethyl-1-ethyl-5-sulfoindolium Hydroxid, Innersalz:
   26,7 g 1-Ethyl-2,3,3-trimethyl-5-sulfoindolium Hydroxid und 27,3 g 2-Methylmalondianil-Hydrochlorid werden in 80 ml Essigsäureanhydrid 1 h bei einer Ölbadtemperatur von 120°C zur Reaktion gebracht. Nach Abkühlung wird mit 600 ml Essigsäureethylester versetzt und abgesaugt. Ausbeute: 39,6 g
C) 1-(5-Carboxypentyl)-2-[5-(1,3-dihydro-1-ethyl-3,3-dimethyl-5-sulfo-2H-indol-2-yliden)-3-methylpenta-1,3-dienyl]-3,3-dimethyl-5-sulfo-3H-indolium Hydroxid, Innersalz, Natriumsalz:
   2,3 g der Verbindung aus A) und 2,2 g der Verbindung aus B) werden in 20 ml Ethanol gelöst und nach Zugabe von 2 ml Triethylamin 20 min. am Rückfluß erhitzt. Nach beendeter Reaktion wird auf Raumtemperatur abgekühlt, mit Ether gefällt und der Niederschlag abfiltriert. Der Rückstand wird mit Aceton verrührt, filtriert, in Methanol aufgenommen und mit einem Tropfen halbkonzentrierter HCl versetzt. Der nach Zugabe von Diethylether erhaltene Rohfarbstoff wird durch Säulenchromatographie über Kieselgel gereinigt. (λ = 645 nm )

### Beispiel 3:

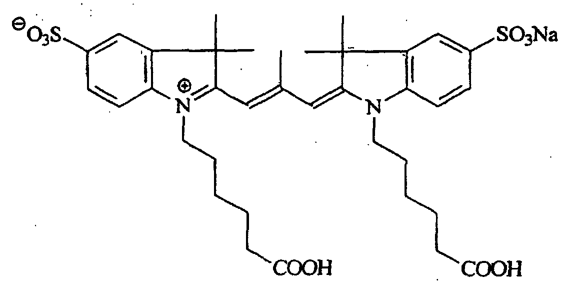

Substanz A) wird analog Beispiel 1 hergestellt.
B) 1-(5-Carboxypentyl)-2-[3-(1,3-dihydro-1-(5-carboxypentyl)-3,3-dimethyl-5-sulfo-2H-indol-2-yliden)-3-methyltprop-1-enyl]-3,3-dimethyl-5-sulfo-3H-indolium Hydroxid, Innersalz, Natriumsalz:
   2,3 g des Quartärsalzes aus A) und 2,4 g Orthoessigsäuretriethylester werden in 15 ml Pyridin in Gegenwart von je 1 ml Acetanhydrid und Triethylamin 30 Minuten am Rückfluß erhitzt. Nach Erkalten wird mit 3 molarer HCl versetzt, der Farbstoff anschließend durch Acetonzusatz gefällt und mehrmals mit Isopropanol ausgekocht. (λ = 548 nm)

### Beispiel 4:

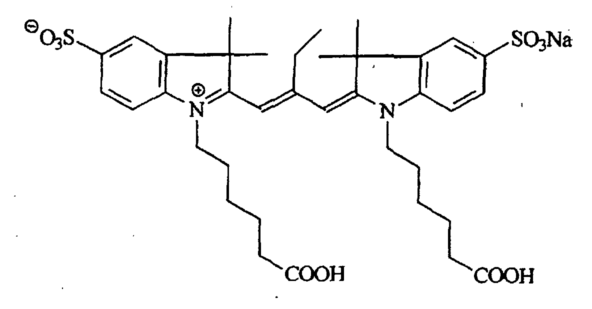

Substanz A) wird analog Beispiel 1 hergestellt.
B) 1-(5-Carboxypentyl)-2-[3-(1,3-dihydro-1-(5-carboxypentyl) -3,3-dimethyl-5-sulfo-2H-indol-2-yliden)-3-ethylprop-1-enyl]-3,3-dimethyl-5-sulfo-3H-indolium Hydroxid, Innersalz, Natriumsalz:
   2,3 g des Quartärsalzes aus A) und 2,7 g Orthopropionsäuretriethylester werden in 15 ml Pyridin in Gegenwart von je 1 ml Acetanhydrid und Triethylamin 30 Minuten am Rückfluß erhitzt. Nach Erkalten wird mit 3 molarer HCl versetzt, der Farbstoff anschließend durch Acetonzusatz gefällt und mehrmals mit Isopropanol ausgekocht. (λ = 549 nm).

### Beispiel 5:

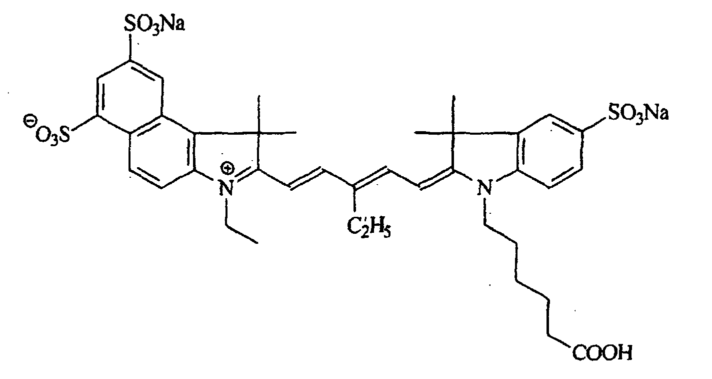

Die Substanz A) wird analog Beispiel 1 hergestellt.
B) Dinatriumsalz des 3-Ethyl-6,8-disulfo-1,1,2-trimethylbenzo[e]-indolium-ethyl-sulfats:
   4,13 g Dinatriumsalz des 6,8-Disulfo-1,1,2-trimethylbenzo[e]-indolenins und 1,7 g Diethylsulfat werden in 10 ml Chlorbenzol 2 h bei einer Badtemperatur von 105°C unter Rühren erhitzt. Nach Abkühlen auf Raumtemperatur wird das Chlorbenzol abdekantiert. Der verbleibende Rückstand wird mit mehrmals Aceton verrieben. Ausbeute: 4,3 g
C) 2-(4-Acetanilino-1,3-butadienyl-3-ethyl)- 1,1-dimethyl-3-ethyl-6,8-disulfo-benzo[e]-indolium Hydroxid, Natriumsalzsalz:
   28,3 g Dinatriumsalz des 3-Ethyl-6,8-disulfo-1,1,2-trimethyl-benzo[e]-indolium-ethyl-sulfats und 13,7 g 2-Methylmalondianil-Hydrochlorid werden in 75 ml Essigsäureanhydrid 1 h bei einer Ölbadtemperatur von 120°C zur Reaktion gebracht. Nach Abkühlen wird mit 550 ml Essigsäureethylester versetzt und abgesaugt. Ausbeute: 23,5 g
D) 2-[5-(1-(5-Carboxypentyl)-1,3-dihydro-3,3-dimethyl-5-sulfo-2H-indol-2-yliden)-3-ethyl-penta-1,3-dienyl]-1,1-dimethyl-3-ethyl-6,8-disulfo-1H-benzo[e]indolium-Innersalz, Dinatriumsalz:
   2,3 g der Verbindung aus A) und 3,1 g der Verbindung aus B) werden in 15 ml Methanol gelöst und nach Zugabe von 3 ml Triethylamin 20 min am Rückfluß erhitzt. Nach Abkühlen auf Raumtemperatur wird mit Diethylether gefällt. Der Rückstand wird in Methanol aufgenommen, mit 4 ml Essigsäure versetzt und durch Etherzugabe ausgefällt. Der so erhaltene Rohfarbstoff wird durch Säulenchromatographie über Kieselgel gereinigt. (λ = 669 nm)

## Patentansprüche

1. Cyaninfarbstoff, mit einer Kombination von Sulfoarylgruppen und Alkylsubstituenten in meso-Position der Methinkette, **dadurch gekennzeichnet, dass** er mindestens eine reaktive Gruppe, die die Bindung an Biomoleküle ermöglicht, enthält und folgende allgemeine Strukturen aufweist: 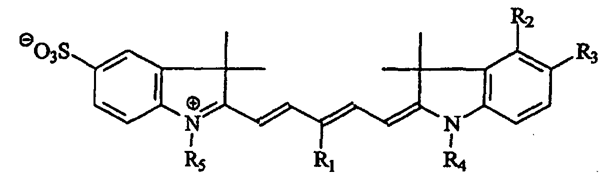 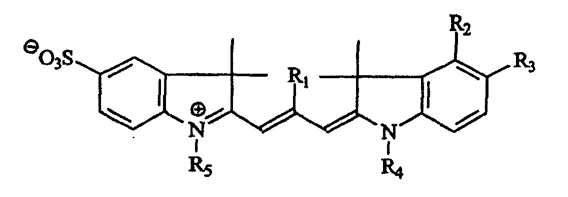 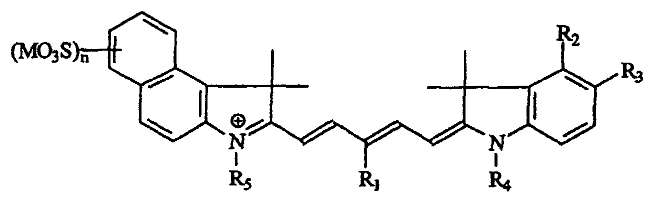 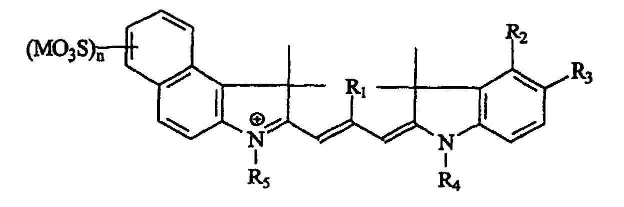 worin n 1 oder 2, R₁ CH₃ oder C₂H₅, R₂ und R₃ H, SO₃M oder die zur Vervollständigung eines Benzolringes notwendigen vier CH-Gruppen bzw. die zur Vervollständigung eines Benzolringes notwendigen vier CH-Gruppen einschließlich (SO₃M)ₙ, wobei M H, Na oder K ist, und R₄ und R₅ gleich oder verschieden Alkyl mit 1 bis 4 Kohlenstoffatomen, Sulfoalkyl mit 2 bis 4 Kohlenstoffatomen, Carboxyalkyl mit 2 bis 6 Kohlenstoffatomen oder Hydroxyalkyl mit 2 bis 6 Kohlenstoffatomen bedeuten worin mindestens einer von R₄ und R₅ die reaktive Gruppe, die die Bindung an Biomoleküle ermöglicht, enthält.

2. Cyaninfarbstoff nach Anspruch 1, **dadurch gekennzeichnet, dass** R₄ und R₅ ein N-Hydroxysuccinimid-Ester der Carboxygruppe (CH₂)ₘCOOH, worin m 2 bis 5 ist und ein Bis-(N,N-diisopropyl)-β-cyanethyl-phosphoramidit der Hydroxygruppe (CH₂)ₘCH₂OH, worin m = 2 bis 5 ist, bedeuten.

3. Verwendung eines Cyaninfarbstoffes nach Anspruch 1 oder 2 als Fluoreszenzmarker für ein Zielmolekül.

4. Verwendung nach Anspruch 3, **dadurch gekennzeichnet, dass** der Absorptionsbereich zwischen 500 und 700 nm liegt.

5. Verwendung nach Anspruch 3 oder 4, **dadurch gekennzeichnet, dass** das Zielmolekül ein Protein ist.

## Claims

1. Cyanine dye, having a combination of sulphoaryl groups and alkyl substituents in the meso position of the methine chain, **characterised in that** it contains at least one reactive group, which makes binding to biomolecules possible, and it has the following general structures: 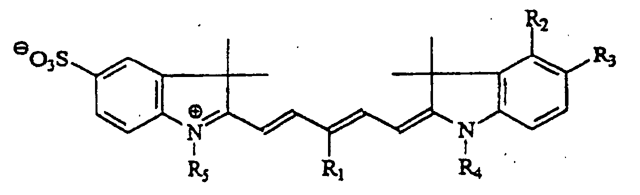 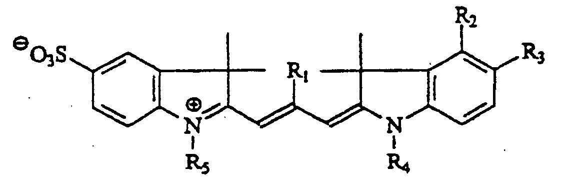 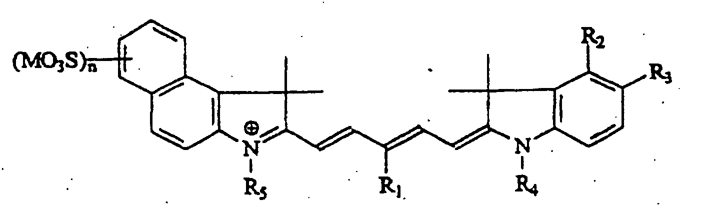 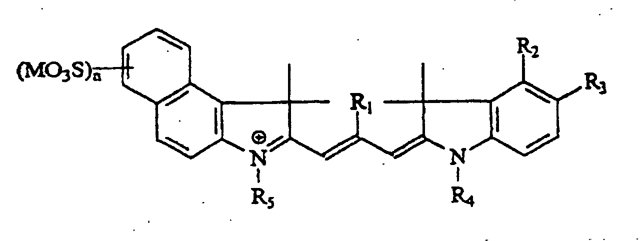 wherein n is 1 or 2, R₁ is CH₃ or C₂H₅, R₂ and R₃ are H, SO₃M or the four CH groups required to complete a benzene ring, or the four CH groups required to complete a benzene ring including (SO₃M)ₙ, M being H, Na or K, and R₄ and R₅ meaning, identically or differently, alkyl having 1 to 4 carbon atoms, sulphoalkyl having 2 to 4 carbon atoms, carboxyalkyl having 2 to 6 carbon atoms or hydroxyalkyl having 2 to 6 carbon atoms, wherein at least one of R₄ and R₅ contains the reactive group which makes binding to biomolecules possible.

2. Cyanine dye according to claim 1, **characterised in that** R₄ and R₅ mean an N-hydroxysuccinimide ester of the carboxy group (CH₂)ₘCOOH, wherein m is 2 to 5 and a bis-(N,N-diisopropyl)-β-cyanoethylphosphoramidite of the hydroxy group (CH₂)ₘCH₂OH, wherein m = 2 to 5.

3. Use of a cyanine dye according to claim 1 or 2 as a fluorescent marker for a target molecule.

4. Use according to claim 3, **characterised in that** the absorption region lies between 500 and 700 nm.

5. Use according to claim 3 or 4, **characterised in that** the target molecule is a protein.

## Revendications

1. Colorant à base de cyanine, avec une combinaison de groupes sulfoaryles et des substituants alkyles en position méso de la chaîne méthine, **caractérisé en ce qu'**il contient au moins un groupe réactif, qui permet la liaison avec des biomolécules et présente les structures générales suivantes : 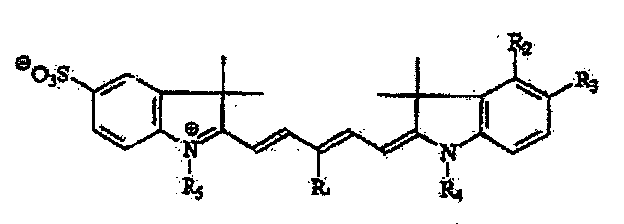 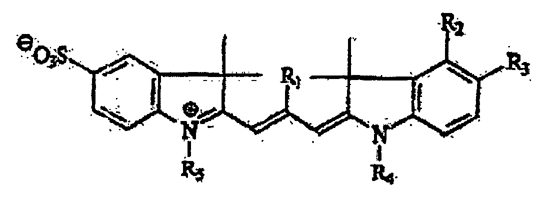 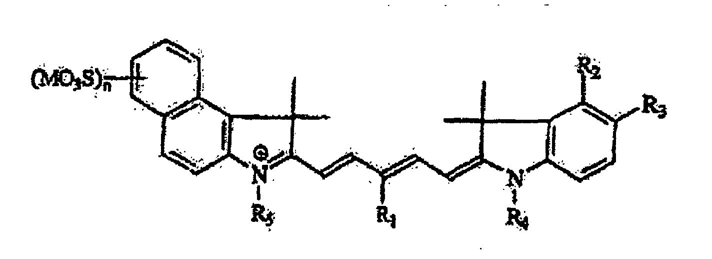 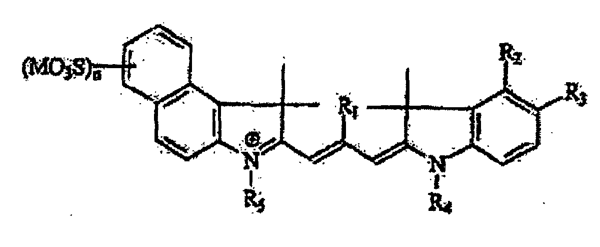 dans lesquelles n signifie 1 ou 2, R₁ représente le groupe CH₃ ou C₂H₅, R₂ ou R₃ représente H, SO₃M ou les quatre groupes CH- nécessaires pour compléter un noyau benzénique respectivement les quatre groupes CH-nécessaires y compris (SO₃M)ₙ pour compléter un noyau benzénique, dans lesquelles M est H, Na ou K, et R₄ et R₅ de façon identique ou différente représentent un groupe alkyle en C1 à C4, un groupe sulfoalkyle en C2 à C4 un groupe carboxyalkyle en C2 à C6 ou un groupe hydroxyalkyle en C2 à C6, dans lesquelles au moins un des groupes R₄ et R₅ contient le groupe réactif qui permet la liaison avec des biomolécules.

2. Colorant à base de cyanine, selon la revendication 1, **caractérisé en ce que** R₄ et R₅ représentent un ester de N-hydroxysuccinimide du groupe carboxy (CH₂)ₘCOOH, dans lequel m prend la valeur de 2 à 5 et d'un bis-(N,N-di-isopropyl)-β-cyanéthylphosphoranidite du groupe hydroxy (CH₂)ₘCH₂OH, dans lequel m prend la valeur de 2 à 5.

3. Utilisation d'un colorant à base de cyanine selon la revendication 1 ou 2 en tant que marqueur fluorescent pour une molécule cible.

4. Utilisation selon la revendication 3, **caractérisée en ce que** le domaine d'absorption se situe entre 500 nm et 700 nm.

5. Utilisation selon la revendication 3 ou 4, **caractérisée en ce que** la molécule cible est une protéine.
